# EUROPEAN PATENT SPECIFICATION

(11) **EP 1 589 266 B1**
(45) Date of publication and mention of the grant of the patent: **21.03.2012**
(21) Application number: 05075895.2
(22) Date of filing: 15.04.2005
(51) Int. Cl.: F16J 15/00, F16J 15/46, F16J 15/52, G01M 3/32

(54) **Seal device**
Dichtungsanordnung
Joint d'étanchéité

(30) Priority: 19.04.2004 JP 2004122847
(43) Date of publication of application: 26.10.2005
(73) Proprietor: Shikoku Kakoki Co., Ltd., Itano-gun, Tokushima 771-0287 (JP)
(72) Inventor: Masakatsu, Kondo c/o Shikoku Kakoki Co., Ltd., Itano-gun, Tokushima 771-0287 (JP); Kenji, Matsumoto c/o Shikoku Kakoki Co., Ltd., Itano-gun, Tokushima 771-0287 (JP)
(74) Representative: Dorna, Peter

(56) References cited:
- EP-A- 0 067 239
- DE-A1- 10 029 305
- FR-A- 2 792 687
- FR-A- 2 836 534
- GB-A- 954 479
- US-A- 4 256 314
- US-A- 5 377 216

## Description

### BACKGROUND OF THE INVENTION

The present invention relates to seal devices, for example, for use in machines for making, filling and sealing containers for sealing off the space between a housing and a shaft inserted therethrough.

Seal devices of the type mentioned are already knows which comprise a housing, a shaft inserted therethrough and a seal ring provided in the housing around the shaft and having an inner periphery in contact with the outer surface of the shaft at all times.

With such seal devices, it is likely that the seal ring will wear away abnormally or break. The seal device further has the problem that the load for driving the shaft is great.

Seal devices which are free of these problems are known which comprise a housing having a bore extending therethrough, and a shaft inserted through the bore, an annular groove being formed in the inner periphery of the housing defining the bore, an elastic seal ring being inserted in the annular groove, the inner peripheral side of the seal ring being movable into contact with the outer periphery of the shaft when pressure is applied to the seal ring, the inner peripheral side of the seal ring being movable away from the shaft outer periphery when the seal ring is relieved of the pressure (see, for example, the publication of JP-A No. 6-272766).

These seal devices have the problem that the seal ring is not positioned with good stability. Accordingly, the seal ring can not be brought into and out of contact with the shaft reliably. It is likely that the seal device of this type will be provided with a stretchable member extending from an edge portion of the housing defining one of opposite openings of the bore to the outer periphery of the shaft for sealing off a space around the shaft. In view of the need to check the stretchable member for pinholes, the stretchable member is given a double structure composed of an inner and an outer component so as to measure the pressure between the two stretchable member components (see, for example, the publication of JP-A No. 63-57991 or GB 954 479 A).

GB 954 479 A describes a leak detector for resilient tubes exposed to a medium underpressure. The device has a body with a cover plate through which extends a bore, a spindle extending through the cover plate. Two corrugated tubes extend from an edge portion of the housing defining an opening of the bore in the outer periphery of the shaft. The corrugated tubes seal off a space around the shaft and a pressure is applicable to inside the corrugated tubes. A pressure gauge is provided to detect the innerpressure between the two corrugated tubes.

With this seal device, the stretchable member is expensive. It is also impossible to check which of the inner and outer components of the stretchable member has a pinhole, if any. The device further requires a large space for installation.

### SUMMARY OF THE INVENTION

An object of the present invention is to provide a seal device wherein a seal ring is reliably movable into or out of contact with a shaft as required, and a stretchable member can be checked for pinholes easily and reliably when the stretchable member is incorporated in the device.

The present invention provides a seal device comprising a housing having a bore extending therethrough, and a shaft inserted through the bore, an annular groove being formed in an inner periphery of the housing defining the bore, an elastic seal ring being inserted in the annular groove, an inner peripheral side of the seal ring being movable into contact with an outer periphery of the shaft when pressure is applied to the seal ring, the inner peripheral side of the seal ring being movable away from the shaft outer periphery when the seal ring is relieved of the pressure, one of opposite openings of the bore being sealed off by a stretchable member, positive pressure or negative pressure being applicable to inside the stretchable member, a sensor being provided for detecting the internal pressure of the stretchable member.

With the seal device of the invention, the stretchable member is checked for pinholes by detecting the internal pressure of the stretchable member, with the inner periphery of the seal ring in contact with the outer periphery of the shaft and with positive or negative pressure applied to the inside of the stretchable member. Accordingly, the pinhole in the stretchable member can be detected easily and reliably.

Preferably, a ring engaging projection is provided on at least one of opposite edges of the housing defining an opening of the groove.

Preferably, the engaging projection provided on the above-mentioned one opening defining edge is an annular ridge extending continuously along the opening defining edge.

The engaging projection provided on the above-mentioned one opening defining edge may be in the form of dots or lines arranged discretely along the opening defining edge.

The engaging projection has opposite side faces, and the side face facing the seal ring may be rounded.

With the seal devices of the two types described, the pressure to be applied to the seal ring is preferably positive pressure to be applied to the outer peripheral side of the seal ring.

The present invention providers another seal device comprising a housing having a bore extending therethrough, and a shaft inserted through the bore, an annular groove being formed in an inner periphery of the housing defining the bore, an elastic seal ring being inserted in the annular groove, an inner peripheral side of the seal ring being movable away from an outer periphery of the shaft when pressure is applied to the seal ring, the inner peripheral side of the seal ring being movable into contact with the shaft outer periphery when the seal ring is relieved of the pressure, a stretchable member extending from an edge portion of the housing defining one of opposite openings of the bore to the outer periphery of the shaft for sealing off a space around the shaft, positive pressure or negative pressure being applicable to inside the stretchable member, a sensor being provided for detecting the internal pressure of the stretchable member.

With this seal device, negative pressure is applied to the seal ring instead of the positive pressure applied to the ring in the seal devices of the foregoing two types.

### BRIEF DESCRIPTION OF THE DRAWINGS

FIG. 1 is a diagram showing the overall construction of a seal device of the invention;
FIG. 2 is a diagram showing a ring groove of the seal device and the vicinity of the groove in detail;
FIG. 3 includes diagrams showing various shapes of ring engaging projections for use in the seal device;
FIG. 4 is a table showing the result obtained by testing the seal device of FIG. 1 for leaks;
FIG. 5 is a diagram corresponding to FIG. 1 and showing a modification of the seal device shown in FIG. 1;
FIG. 6 is a table showing the result obtained by testing the seal device of FIG. 5 for leaks;
FIG. 7 is a diagram corresponding to FIG. 1 and showing another modification of the seal device shown in FIG. 1; and
FIG. 8 is a diagram showing a ring groove of the seal device shown in FIG. 7 and the vicinity of the groove in detail.

### DESCRIPTION OF THE PREFERRED EMBODIMENTS

Embodiments of the present invention will be described below with reference to the drawings.

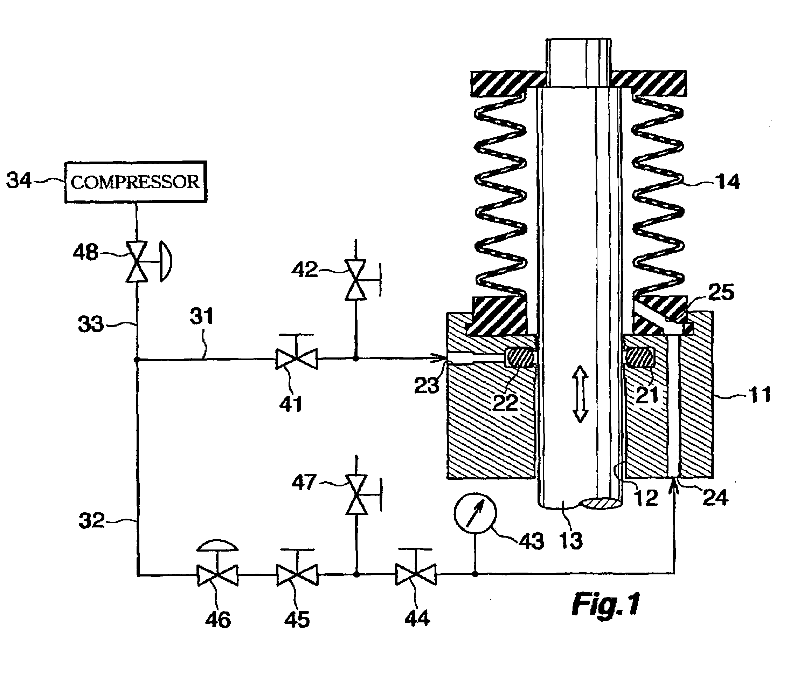

Referring to FIG. 1, a block 11 serving as a housing component of a packaging machine has a shaft bore 12 vertically extending therethrough. A vertical shaft 13 is inserted through the shaft bore 12. The shaft 13 is axially reciprocatingly moved by unillustrated means. Extending from an edge portion of the block 11 defining the upper-end opening of the bore 12 to the outer surface of the upper end of the shaft 13 is a stretchable vertical tubular member having a bellows-shaped trunk, i.e., bellows 14 provided around the shaft 13 for sealing off a space around the shaft 13.

The inner periphery of the block 11 defining the shaft bore 12 has an annular ring groove 21 positioned close to the upper end of the bore 12. The groove 21 has a seal ring 22 inserted therein. The seal ring 22 to be used is a ring made of elastic material such as rubber.

The block 11 has a first air supply port 23 extending from the outer periphery thereof to the bottom of the ring groove 21, and a second air supply port 24 extending upward from the bottom surface thereof. The second port 24 has an upper end opening communicating with the interior of the bellows 14 through a communication passageway 25 formed in the bellows 14.

A first air supply pipe 31 is connected at one end thereof to the first air supply port 23. Connected to the second air supply port 24 is one end of a second air supply pipe 32. The other ends of the first and second pipes 31, 32 are joined to each other and connected to one end of a third air supply pipe 33. The other end of the third pipe 33 is connected to a compressor 34.

The first air supply pipe 31 is provided with a first shutoff valve 41. Between the first air supply port 23 and the first shutoff valve 41, the first pipe 31 communicates with the atmosphere via a second shutoff valve 42. The second air supply pipe 32 is provided with a pressure sensor 43, third shutoff valve 44, fourth shutoff valve 45 and first pressure control valve 46 which are arranged in this order from a position closer to the second air supply port 24 toward the other end of the pipe 31. Between the third shutoff valve 44 and the fourth shutoff valve 45, the second pipe 32 is open to the atmosphere via a fifth shutoff valve 47. The third air supply pipe 33 is provided with a second pressure control valve 48.

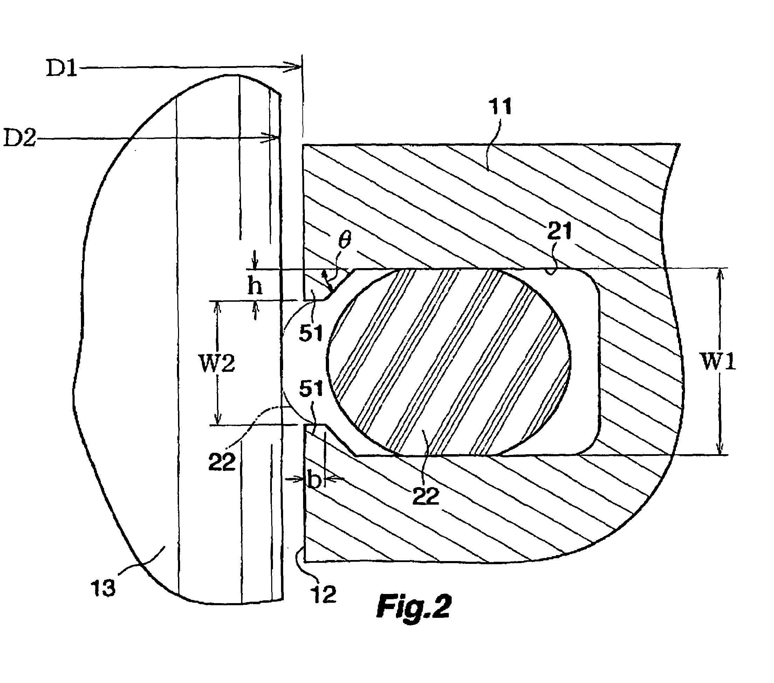

FIG. 2 shows the ring groove 21 and the vicinity thereof in detail. Opposite edge portions of the block 11 defining an opening of the ring groove 21 are provided with respective ring engaging projections 51 opposed to each other. Each of these projections 51 is annular to extend over the entire length of the corresponding opening-defining edge portion and has a generally trapezoidal cross section.

The seal ring 22, i.e., an O-ring 22, is shown as positioned away from the inner side faces of the projections 51 in FIG. 2. In a steady state, for example, while the spaces inside and outside the O-ring 22 are left open to the atmosphere, the 0-ring 22 is lightly in contact with the projections 51. In this state, the inner peripheral side of the ring 22 is positioned away from the outer peripheral surface of the shaft 13.

When positive pressure is applied to the back side of the 0-ring 22 in this steady state, the 0-ring 22 is deformed to contract, the deformed portion is forced out from between the opposed projections 51 and the inner end of this portion is pressed against the outer surface of the shaft 13 (as indicated in a chain line), whereby the passage of air between the upper and lower opposite sides of the O-ring is blocked for sealing.

Now, for a better understanding of the sealing effect of the O-ring, the parts participating in the sealing action will be described with reference to numerical values.

The shaft bore 12 is 25.5 mm in inside diameter D1, the shaft 13 is 25.0 mm in outside diameter D2, and the ring groove 21 is 3.0 mm in entire width W1. Assuming that the projections 51 have a height h of 0.65 mm, the opening of the ring groove 21 is 2.7 mm in width W2. Assuming that the inner ends of the projections 51 are 2 mm in width b, the inner side faces of the projections 51 have an angle θ of 45 degrees.

With reference to FIG. 1 again, a procedure for detecting pinholes in the bellows 14 will be described next.

With the first shutoff valve 41 opened and with the second shutoff valve 42 closed, positive pressure is applied to the outer side of the 0-ring 22 within the ring groove 21 through the first air supply pipe 31 and the first air supply port 23. The pressure to be applied at this time is about 5 kgf/cm². The pressure applied presses the inner side of the O-ring 22 against the outer surface of the shaft 13, causing the O-ring 22 to seal off the interior of the bellows 14.

Next, the third and fourth shutoff valves 44, 45 are opened, the fifth shutoff valve 47 is closed, and positive pressure is applied to the interior of the bellows 14 through the second air supply pipe 32 and the second air supply port 24. Upon the internal pressure of the bellows 14 reaching a predetermined level, e.g., 0.2 to 1.0 kgf/cm², while the pressure sensor 43 is being checked, the third shutoff valve 44 is closed to hold the internal pressure of the bellows 14 at the predetermined level. After the lapse of a specified period of time, the bellows 14 are checked for leakage by observing the pressure sensor 43. If occurring, the leakage reduces the pressure.

After the completion of the leak test, the first shutoff valve 41 is closed, and the second shutoff valve 42 is opened to relieve the 0-ring 22 of the back pressure and move the O-ring 22 away from the outer surface of the shaft 13. The air within the bellows 14 is released to the atmosphere by opening the third and fifth shutoff valves 44, 47 and closing the fourth shutoff valve 45.

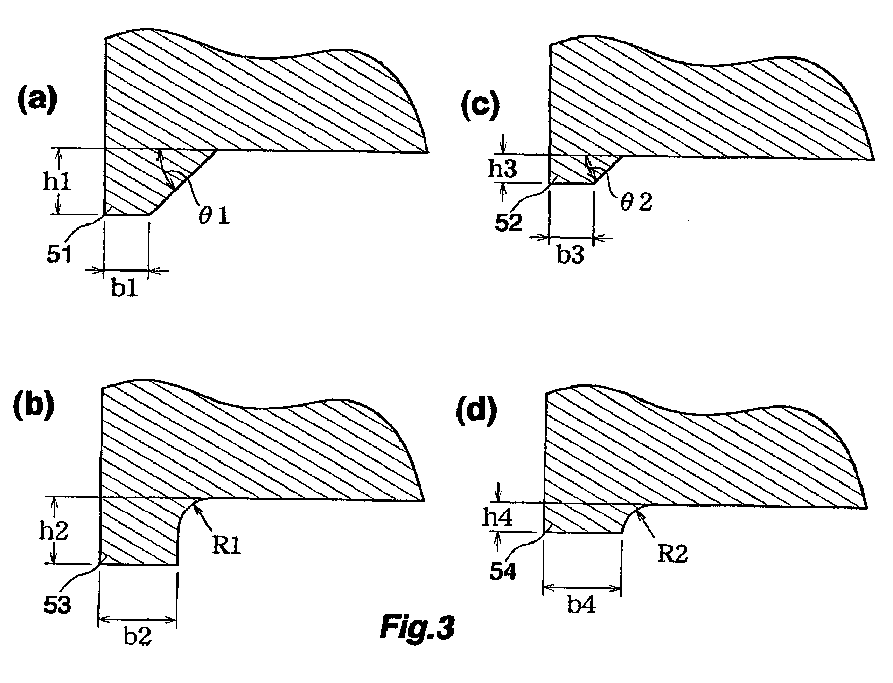

With reference to FIG. 3, the influence of the size and shape of the projections 51 on the sealing effect of the O-ring will be substantiated.

FIG. 3(a) shows a projection 51 having the same shape as the projection 51 shown in FIG. 2. Stated more specifically, h1 = h = 0.65 mm, b1 = b = 0.2 mm and θ1 = θ = 45 degrees. FIG. 3(b) shows a projection 52 which is 0.65 mm in h2, 0.5 mm in b2 and 0.4 mm in R1. FIG. 3 (c) shows a projection 53 which is 0. 4 mm in h3, 0.2 mm in b3 and 45 degrees in θ 2. FIG. 3(d) shows a projection 54 which is 0.4 mm in h4, 0.5 mm in b4 and 0,4 mm in R2.

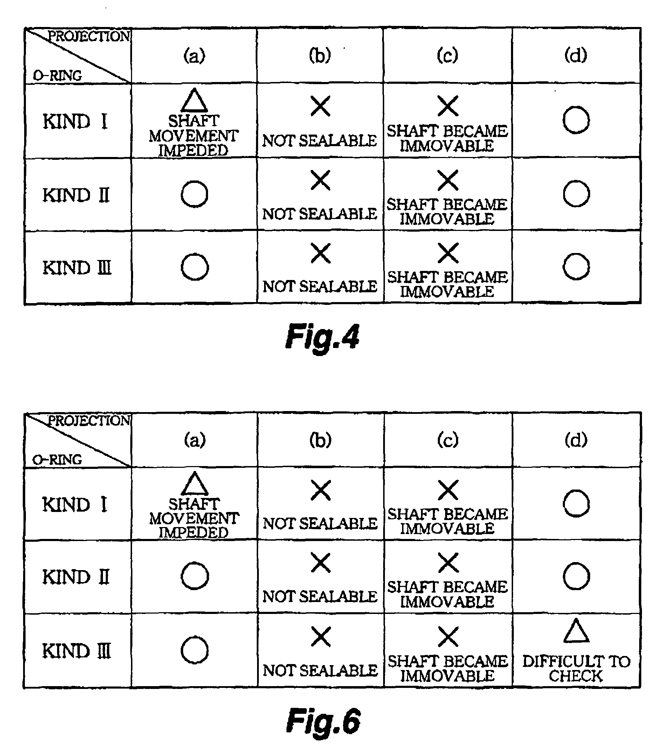

These four kinds of projections 51 to 54 were tested for leaks by the procedure described above. Three kinds of O-rings 22 were used which were Kind I having an inside diameter of 24.549 mm, Kind II having an inside diameter of 25.089 mm and Kind III having an inside diameter of 25.436 mm. FIG. 4 shows the test result which was obtained by checking the bellows 14 for a pinhole. When the pinhole was detected, the result is indicated by the mark O in FIG. 4. The projections (a) to (d) in FIG. 4 correspond to those shown in FIG. 3, (a) to (d), respectively, in shape.

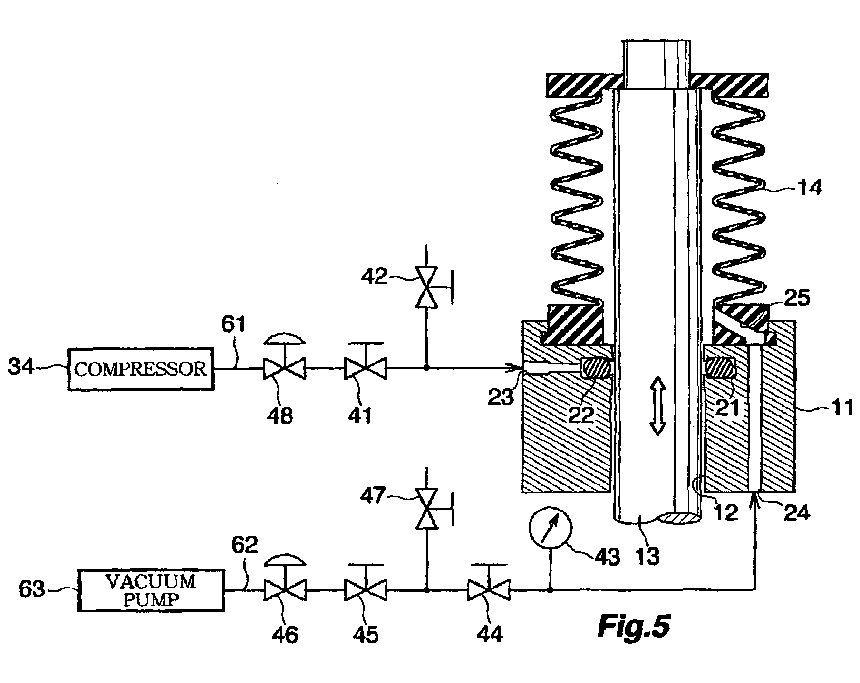

In the pinhole test described with reference to FIG. 1, the bellows 14 were held at positive internal pressure during testing. FIG. 5 shows an arrangement wherein bellows 14 are held at negative pressure.

The first air supply port 23 is caused to communicate directly with a compressor 34 by a fourth air supply pipe 61. The fourth pipe 61 is provided with the first shutoff valve 41 and second shutoff valve 42 which are mounted on the first air supply pipe 31, and with the second pressure control valve 48 mounted on the third pipe 33. The second air supply port 24 is caused to communicate with a vacuum pump 63 by a fifth air supply pipe 62. The pressure sensor 43, the third, fourth and fifth shutoff valves 44, 45, 47 and the first pressure control valve 46 which are mounted on the second air supply pipe 32 are similarly provided on the fifth pipe 62.

Back pressure is applied to the O-ring 22 in the same manner as described with reference to FIG. 1. Furthermore, predetermined negative pressure is applied to the interior of the bellows 14 by similarly opening or closing the third, fourth and fifth shutoff valves 44, 45, 47. The magnitude of negative pressure to be applied is about -0.8 to -0.2 kgf/cm².

The same four kinds of projections 51 to 54 and three kinds of 0-rings 22 as used in the above leak test were similarly used in a leak test. FIG. 6 shows the test result.

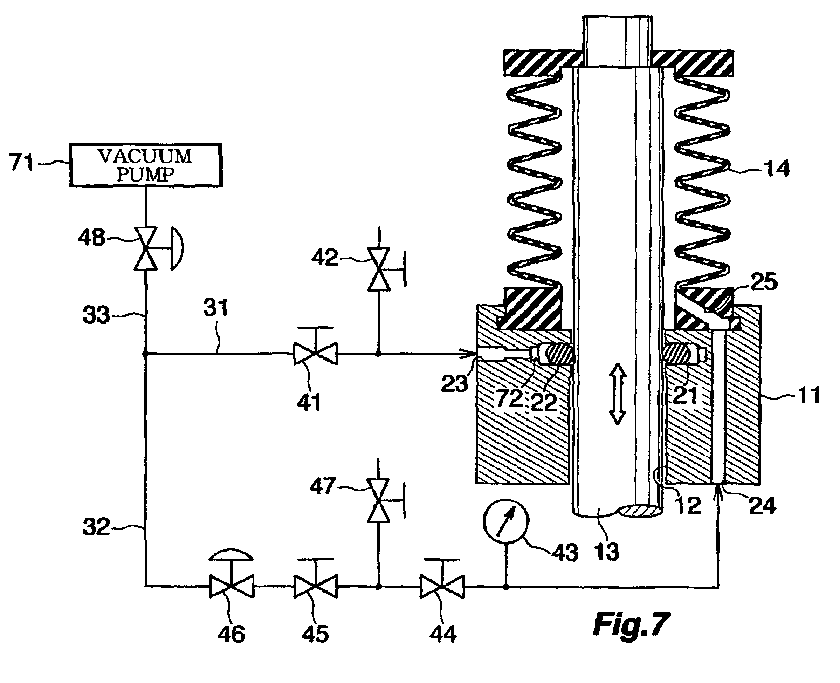

In the tests described with reference to FIGS. 1 and 5, positive pressure was applied to the O-ring 22 to press the 0-ring 22 against the shaft 13. FIG. 7 shows an arrangement wherein negative pressure is applied to the O-ring 22. A vacuum pump 71 is used in FIG. 7 in place of the compressor 34 of FIG. 1.

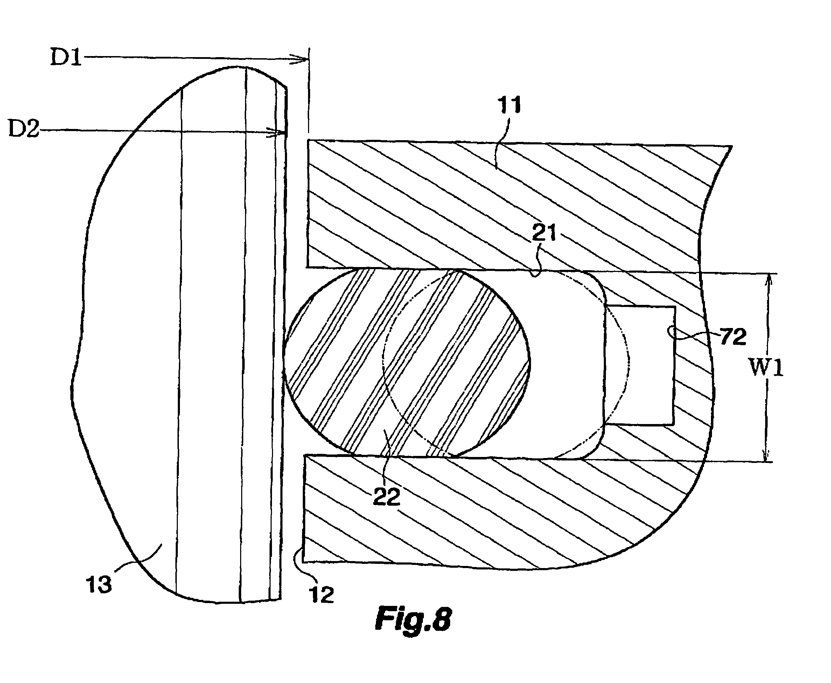

As shown in detail in FIG. 8, the O-ring 22 is pressed against the shaft 13 in a steady state and thereby produces a sealing effect. When negative pressure is applied to the O-ring 22 as back pressure in this state, the ring 22 is deformed so as to radially expand and is moved away from the shaft 13 (as indicated in a chain line), whereby the spaces above and blow the O-ring 22 are held in communication. The bottom of the ring groove 21 shown in FIG. 8 is provided with a furrow 72 to prevent intimate contact of the O-ring 22 with the bottom surface.

The procedure for applying negative pressure to the O-ring 22 and the procedure for applying negative pressure to the interior of the bellows 14 in FIG. 7 is the same as the respective procedures for applying positive pressure to the O-ring and for applying positive pressure to the interior of the bellows 14 in FIG. 1, with negative pressure substituted for positive pressure.

The arrangement may be tested by applying positive pressure to the interior of the bellows 14 instead of negative pressure, with negative pressure applied to the O-ring 22. In this case, a compressor may be used in place of the vacuum pump 63 shown in FIG. 5.

The projection 51 described above continuously extends in an annular form, whereas the projection 51 may alternatively be in the form of dots or lines arranged discretely.

Although one of the projections 51 to 54 is formed on each of opposed edge portions defining the opening of the ring groove 21, the projection may be provided on only one of the opposed edge portions.

The seal device described above is useful for testing the bellows to be used for blocking the passage of air between an aseptic chamber of packaging machines and a shaft extending and vertically movable through the chamber, and the bellows for sealing off a shaft for moving a chuck valve upward or downward for filling nozzles, from the liquid to be filled.

## Claims

1. A seal device comprising a housing (11) having a bore (12)
extending therethrough, and a shaft (13) inserted through the bore (12),
a stretchable member (14) extending from an edge portion of the housing (11) defining one of opposite openings of the bore (12) to the outer periphery of the shaft (13) for sealing off a space around the shaft (13), positive pressure or negative pressure being applicable to inside the stretchable member (14), a sensor (43) being provided for detecting the internal pressure of the stretchable member (14), **characterised in that** an annular groove (21) being formed in an inner periphery of the housing defining the bore, an elastic seal ring (22) being inserted in the annular groove (21), an inner peripheral side of the seal ring (22) being movable into contact with an outer periphery of the shaft (13) when pressure is applied to the seal ring (22), the inner peripheral side of the seal ring (22) being movable away from the shaft (13) outer periphery when the seal ring (22) is relieved of the pressure.

2. A seal device according to claim 1 wherein a ring engaging projection (51) is provided on at least one of opposite edges of the housing defining an opening of the groove (21).

3. A seal device according to claim 2 wherein the engaging projection (51) provided on said one opening defining edge is an annular ridge extending continuously along said one opening defining edge.

4. A seal device according to claim 2 wherein the engaging projection provided on said one opening defining edge is in the form of dots or lines arranged discretely along said one opening defining edge.

5. A seal device according to any one of claims 1 to 4 wherein the engaging projection (53, 54) has opposite side faces, and the side face facing the seal ring is rounded.

6. A seal device according to any one of claims 1 to 5 wherein the pressure to be applied to the seal ring is positive pressure to be applied to the outer peripheral side of the seal ring.

7. A seal device comprising a housing (11) having a bore (12) extending therethrough, and a shaft (13) inserted through the bore (12), a stretchable member (14) extending from an edge portion of the housing (11) defining one of opposite openings of the bore (12) to the outer periphery of the shaft (13) for sealing off a space around the shaft (13), positive pressure or negative pressure being the shaft, positive pressure or negative pressure being applicable to inside the stretchable member (14), a sensor (43) being provided for detecting the internal pressure of the stretchable member (14), **characterised in that** an annular groove (21) being formed in an inner periphery of the housing defining the bore, an elastic seal ring (22) being inserted in the angular groove (21), an inner peripheral side of the seal ring (22) being movable away from an outer periphery of the shaft (13) when pressure is applied to the seal ring (22), the inner peripheral side of the seal ring (22) being movable into contact with the shaft (13) outer periphery when the seal ring (22) is relieved of the pressure.

8. A seal device according to claim 7 wherein the pressure to be applied to the seal ring is negative pressure to be applied to the outer peripheral side of the seal ring.

## Patentansprüche

1. Dichtungsvorrichtung mit einem Gehäuse (11), durch das sich eine Bohrung (12) erstreckt, und einer durch die Bohrung (12) eingesetzten Welle (13),
wobei sich ein dehnbares Element (14) von einem Randbereich des Gehäuses (11) erstreckt, das eine von entgegengesetzten Öffnungen der Bohrung (12) zum Außenumfang der Welle (13) zur Abdichtung eines Raumes um die Welle (13) definiert, wobei ein Überdruck oder ein Unterdruck innen auf das dehnbare Element (14) aufgebracht werden kann, wobei ein Sensor (43) zur Erfassung des Innendrucks des dehnbaren Elements (14) vorgesehen ist, **dadurch gekennzeichnet, dass** eine Ringnut (21) in einem Innenumfang des die Bohrung definierenden Gehäuses gebildet ist, wobei ein elastischer Dichtungsring (22) in die Ringnut (21) eingesetzt ist, wobei eine Innenumfangsseite des Dichtungsrings (22) in Kontakt mit einem Außenumfang der Welle (13) bewegbar ist, wenn Druck auf den Dichtungsring (22) aufgebracht wird, wobei die Innenumfangsseite des Dichtungsrings (22) vom Außenumfang der Welle (13) weg bewegbar ist, wenn der Dichtungsring (22) vom Druck entlastet wird.

2. Dichtungsvorrichtung nach Anspruch 1, bei der ein Ringanlagevorsprung (51) an wenigstens einem von gegenüberliegenden Rändern des Gehäuses vorgesehen ist, der eine Öffnung der Nut (21) definiert.

3. Dichtungsvorrichtung nach Anspruch 2, bei der der an dem einen die Öffnung definierenden Rand vorgesehene Anlagevorsprung (51) ein ringförmiger Grat ist, der sich umlaufend entlang dem einen die Öffnung definierenden Rand erstreckt.

4. Dichtungsvorrichtung nach Anspruch 2, bei der der an dem einen die Öffnung definierenden Rand vorgesehene Anlagevorsprung in Form von Punkten oder Linien vorliegt, die diskret entlang dem einen die Öffnung definierenden Rand angeordnet sind.

5. Dichtungsvorrichtung nach einem der Ansprüche 1 bis 4, bei der der Anlagevorsprung (53, 54) entgegengesetzte Seitenflächen aufweist und die dem Dichtungsring zugewandte Seitenfläche abgerundet ist.

6. Dichtungsvorrichtung nach einem der Ansprüche 1 bis 5, bei der der auf den Dichtungsring aufzubringende Druck ein auf die Außenumfangsseite des Dichtungsrings aufzubringender Überdruck ist.

7. Dichtungsvorrichtung mit einem Gehäuse (11), durch das sich eine Bohrung (12) erstreckt, und einer durch die Bohrung (12) eingesetzten Welle (13),
wobei sich ein dehnbares Element (14) von einem Randbereich des Gehäuses (11) erstreckt, das eine von entgegengesetzten Öffnungen der Bohrung (12) zum Außenumfang der Welle (13) zur Abdichtung eines Raumes um die Welle (13) definiert, wobei ein Überdruck oder ein Unterdruck innen auf das dehnbare Element (14) aufgebracht werden kann, wobei ein Sensor (43) zur Erfassung des Innendrucks des dehnbaren Elements (14) vorgesehen ist, **dadurch gekennzeichnet, dass** eine Ringnut (21) in einem Innenumfang des die Bohrung definierenden Gehäuses gebildet ist, wobei ein elastischer Dichtungsring (22) in die Ringnut (21) eingesetzt ist, wobei eine Innenumfangsseite des Dichtungsrings (22) von einem Außenumfang der Welle (13) weg bewegbar ist, wenn Druck auf den Dichtungsring (22) aufgebracht wird, wobei die Innenumfangsseite des Dichtungsrings (22) in Kontakt mit dem Außenumfang der Welle (13) bewegbar ist, wenn der Dichtungsring (22) vom Druck entlastet wird.

8. Dichtungsvorrichtung nach Anspruch 7, bei der der auf den Dichtungsring aufzubringende Druck ein auf die Außenumfangsseite des Dichtungsrings aufzubringender Unterdruck ist.

## Revendications

1. Dispositif de joint d'étanchéité comprenant un boîtier (11) ayant un alésage (12) s'étendant à travers ce dernier, et une tige (13) insérée à travers l'alésage (12),
un élément étirable (14) s'étendant à partir d'une partie de bord du boîtier (11) définissant l'une des ouvertures opposées de l'alésage (12) par rapport à la périphérie externe de la tige (13) pour fermer hermétiquement un espace situé autour de la tige (13), une pression positive ou une pression négative pouvant être appliquée à l'intérieur de l'élément étirable (14), un capteur (43) étant prévu pour détecter la pression interne de l'élément étirable (14), **caractérisé en ce qu'**une rainure annulaire (21) est formée dans une périphérie interne du boîtier définissant l'alésage, une bague de joint d'étanchéité élastique (22) étant insérée dans la rainure annulaire (21), un côté périphérique interne de la bague de joint d'étanchéité (22) étant mobile en contact avec une périphérie externe de la tige (13) lorsque la pression est appliquée sur la bague de joint d'étanchéité (22), le côté périphérique interne de la bague de joint d'étanchéité (22) étant mobile à distance de la périphérie externe de la tige (13) lorsque la bague de joint d'étanchéité (22) est libérée de la pression.

2. Dispositif de joint d'étanchéité selon la revendication 1, dans lequel une saillie de mise en prise de bague (51) est prévue sur au moins l'un des bords opposés du boîtier définissant une ouverture de la rainure (21).

3. Dispositif de joint d'étanchéité selon la revendication 2, dans lequel la saillie de mise en prise (51) prévue sur ledit un bord de définition d'ouverture est une crête annulaire s'étendant de manière continue le long dudit un bord de définition d'ouverture.

4. Dispositif de joint d'étanchéité selon la revendication 2, dans lequel la saillie de mise en prise prévue sur ledit un bord de définition d'ouverture se présente sous la forme de pointillés ou de lignes agencées distinctement le long dudit un bord de définition d'ouverture.

5. Dispositif de joint d'étanchéité selon l'une quelconque des revendications 1 à 4, dans lequel la saillie de mise en prise (53, 54) a des faces latérales opposées, et la face latérale faisant face à la bague de joint d'étanchéité est arrondie.

6. Dispositif de joint d'étanchéité selon l'une quelconque des revendications 1 à 5, dans lequel la pression à appliquer sur la bague de joint d'étanchéité est la pression positive à appliquer sur le côté périphérique externe de la bague de joint d'étanchéité.

7. Dispositif de joint d'étanchéité comprenant un boîtier (11) ayant un alésage (12) s'étendant à travers ce dernier, et une tige (13) insérée à travers l'alésage (12), un élément étirable (14) s'étendant à partir d'une partie de bord du boîtier (11) définissant l'une des ouvertures opposées de l'alésage (12) par rapport à la périphérie externe de la tige (13) pour fermer hermétiquement un espace situé autour de la tige (13), la pression positive ou la pression négative pouvant être appliquée sur l'intérieur de l'élément étirable (14), un capteur (43) étant prévu pour détecter la pression interne de l'élément étirable (14), **caractérisé en ce que** :
une rainure annulaire (21) est formée dans une périphérie interne du boîtier définissant l'alésage, une bague de joint d'étanchéité élastique (22) étant insérée dans la rainure annulaire (21), un côté périphérique interne de la bague de joint d'étanchéité (22) étant mobile à distance d'une périphérie externe de la tige (13) lorsque la pression est appliquée sur la bague de joint d'étanchéité (22), le côté périphérique interne de la bague de joint d'étanchéité (22) étant mobile en contact avec la périphérie externe de la tige (13) lorsque la bague de joint d'étanchéité (22) est libérée de la pression.

8. Dispositif de joint d'étanchéité selon la revendication 7, dans lequel la pression à appliquer sur la bague de joint d'étanchéité est la pression négative à appliquer sur le côté périphérique externe de la bague de joint d'étanchéité.
